# EUROPEAN PATENT APPLICATION

(11) **EP 1 357 549 A2**
(43) Date of publication of application: **29.10.2003**
(21) Application number: 02017679.8
(22) Date of filing: 07.08.2002
(51) Int. Cl.: G11B 7/095

(54) **Method of controlling tilt servo in DVD system**

(30) Priority: 23.04.2002 KR 2002022181
(71) Applicant: DVS Korea Co., Ltd., Sungnam-city, Kyungki-do 463-726 (KR)
(72) Inventor: Park, Deok-Hwan, Hanam-city, Kyungki-do 465-120 (KR); Jung, Jae-Joon, 303-604, Halla Apartment, Sungnam-city, Kyungki-do 463-480 (KR)
(74) Representative: Balsters, Robert

(57) **Abstract**

Disclosed herein is a method of controlling a tilt servo in a DVD system. The tilt servo control method includes the step of reading a first jitter value "A" (y₀). Thereafter, a second jitter value "B" (y₂) is read after an angle of an objective lens is moved by a predetermined step (x₀-x₁). If the first jitter value "A" is equal to or smaller than the second jitter value "B", the angle of the objective lens is optimized by performing the tilt servo while the angle of the objective lens is moved. If the first jitter value "A" is larger than the second jitter value "B", a third jitter value "C" (y₁) is read after the angle of the objective lens is moved by the predetermined step (x₁-x₂). If the first jitter value "A" is equal to or smaller than the third jitter value "C", the angle of the objective lens is optimized by performing the tilt servo while the angle of the objective lens is moved. If the first jitter value "A" is larger than the third jitter value "C", the angle of the objective lens is optimized while the angle of the objective lens is moved by half of the predetermined step (x₂-x₃).

## Description

### BACKGROUND OF THE INVENTION

### 1. Field of the Invention

The present invention relates generally to a method of controlling a tilt servo in a digital versatile disc system, and more particularly to a method of controlling a tilt servo in a digital versatile disc system, which is capable of minimizing a deviation between an information surface and an objective lens, which is caused by the bend of a disc when data are read, on the basis of jitter information in the system in which an actuator tilt servo is implemented in a pick-up head, thereby minimizing a data read error.

### 2. Description of the Prior Art

Typically, Digital Versatile Disc (DVD) players and DVD drivers have no provision for the deterioration of signal quality due to a tilt (or, a skew) produced by the bend of a disc (DVD specification: radial deviation = ±0.8°, tangential deviation = ±0.3°).

The disc bend is produced in the process of manufacturing a disc.

For the purpose of overcoming that problem, there are employed software and hardware methods, which will be described in detail hereinafter.

The software method is to improve reading performance by learning signal portions representing disc bend characteristics. However, this method does not provide direct control of the disc bend, but corrects the disc bend by offsetting a servo error with the incidental signal generation considered. Therefore, this software method is disadvantageous in that good performance cannot be guaranteed for a disc bent past a particular angle.

The hardware method is carried out by forcibly pressing a disc in one direction when the disc is fixed. A disc bend is apt to be formed in an upward direction in the process of manufacturing the disc. On the basis of this experimental principle, a method in which a circumference of the disc is pressed downward is being attempted. However, this method does not provide a solution for the disc bent in a downward direction.

In order to overcome the disadvantages of the above-mentioned first and second methods, a new hardware method has been proposed, which provides a tilt servo function for a pick-up head (PUH) itself.

With the control of the PUH employing the tilt servo function, the disc bend can be corrected in both upward and downward directions. A drive IC specialized for the tilt servo is employed as a particular technical means for the control.

The third method is performed by driving a tilt actuator depending upon signals (mainly, jitters) representing signal quality while monitoring the signals through a particular frequency.

However, the third method is disadvantageous in that it is applicable to only chip sets having jitter signals as outputs because a jitter signal should be used as a control parameter, a jitter has no discrimination of a good cause from a bad cause on a disc or a slow response, and the use of the specialized drive IC for the tilt servo incurs high cost.

### SUMMARY OF THE INVENTION

Accordingly, the present invention has been made keeping in mind the above problems occurring in the prior art, and an object of the present invention is to provide a method of controlling a tilt servo in a digital versatile disc system, which is capable of minimizing a deviation between an information surface and an objective lens, which is caused by the bend of a disc when data are read, on the basis of jitter information in the system in which an actuator tilt servo is implemented in a pick-up head, thereby minimizing a data read error.

In order to accomplish the above object, the present invention provides a method of controlling a tilt servo in a digital versatile disc system, comprising the steps of:
determining whether a data read error is generated, and reading a first jitter value "A" at a current position if it is determined that the data read error is generated;
reading a second jitter value "B" after an angle of an objective lens is moved by a predetermined step in an upward (+) direction;
comparing the first and second jitter values "A" and "B" to each other, and optimizing the angle of the objective lens by performing the tilt servo while the angle of the objective lens is moved in the upward (+) direction if the first jitter value "A" is equal to or smaller than the second jitter value "B";
reading a third jitter value "C" after the angle of the objective lens is moved by the predetermined step in the downward (-) direction if the first jitter value "A" is larger than the second jitter value "B";
comparing the first "A" and third "C" jitter values to each other, and optimizing the angle of the objective lens by performing the tilt servo while the angle of the objective lens is moved in the downward (-) direction if the first jitter value "A" is equal to or smaller than the third jitter value "C"; and
optimizing the angle of the objective lens while the angle of the objective lens is moved by half of the predetermined step in the downward (-) direction from a current position if the first jitter value "A" is larger than the third jitter value "C".

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a schematic block diagram showing a configuration of a DVD system to which the present invention is applied;
FIG. 2 is a diagram showing the state of an objective lens before and after performing a tilt servo in the present invention;
FIG. 3 is a graph showing an optimizing path for maintaining the optimized angle of the objective lens in the present invention; and
FIG. 4 is a flow chart showing a method of controlling a tilt servo in the DVD system in accordance with the present invention.

### DESCRIPTION OF THE PREFERRED EMBODIMENTS

Reference now should be made to the drawings, in which the same reference numerals are used throughout the different drawings to designate the same or similar components.

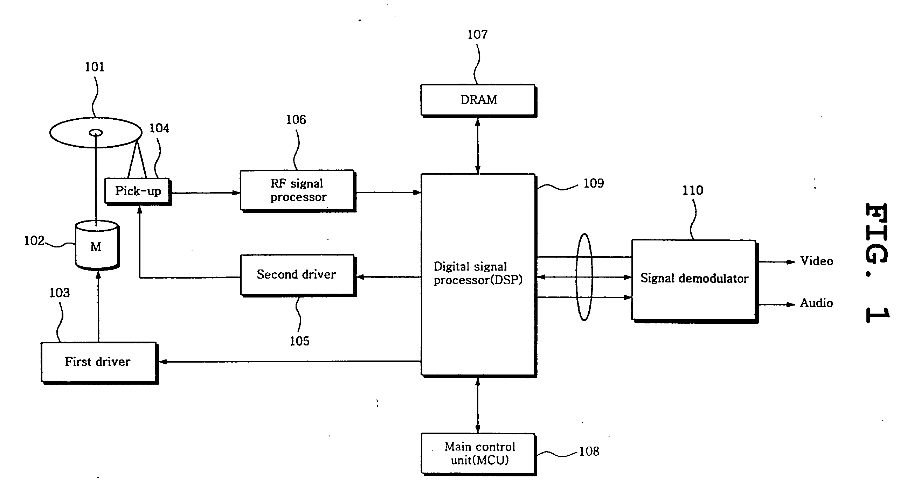

FIG. 1 is a schematic block diagram showing a configuration of a DVD system to which the present invention is applied.

Reference numeral 101 designates a disc on which information is recorded, reference numeral 102 designates a motor for rotating a turntable on which the disc 101 is placed, reference numeral 103 designates a first driver for driving the motor 102, reference numeral 104 designates a pick-up for reading the information recorded on the disc 101, and reference numeral 105 designates a second driver for conveying the pick-up 104. The pick-up 104 incorporates a tilt servo function through which the angle of an objective lens can be controlled.

Reference numeral 106 designates a Radio Frequency (RF) signal processor for processing RF signals outputted from the pick-up 104, reference numeral 109 designates a Digital Signal Processor (DSP) for controlling the first and second drivers 103 and 105, transmitting data outputted from the RF signal processor 106 to a signal demodulator placed at the next stage, interfacing control data through communication with a main control unit 108, and transmitting generated data to a Dynamic Random Access Memory (DRAM) 107, and reference numeral 110 designates the signal demodulator for dividing data transmitted from the DSP 109 into two signals, i.e., an image signal and an audio signal, demodulating the two signals, and outputting demodulated signals through different paths.

In the DVD system which is constructed as described above and to which the present invention is applied, after the disc 101 is placed on the turntable, the motor 102 is operated by the driving of the first driver 103 and, consequently, the disc 101 is rotated by the rotation of the turntable.

In addition, the pick-up 104 is conveyed by the driving of the second driver 105 to read information recorded on the information surface of the disc 101.

The read information is transmitted to the RF signal processor 106, which in turn processes the transmitted RF signal, converts the processed RF signal into digital data and transmit the digital data to the DSP 109.

The DSP 109 processes the transmitted digital data and transmits the processed digital data to the signal demodulator 110, which in turn divides the data transmitted from the DSP 109 into two signals, i.e., image and audio signals, demodulates the two signals and outputs the demodulated signals through separate output ports. The demodulated image signal is displayed on a monitor, while the demodulated audio signal is outputted to the external through a speaker.

In addition, the DSP 109 stores data such as control data generated during reproduction into the DRAM 107 and also is connected to the main control unit 108 for interfacing the control data.

In addition, the pick-up 104 is equipped with the tilt servo function for adjusting the angle of the objective lens.

As mentioned above, while the tilt servo function was conventionally implemented using the specialized drive IC for the tilt servo, such an approach is disadvantageous in that it is applicable to only chip sets having jitter signals as outputs because a jitter signal should be used as a control parameter, a jitter has no discrimination of a good cause from a bad cause on a disc or a slow response, and the use of the specialized drive IC for the tilt servo incurs high cost.

Accordingly, the present invention provides a method of controlling a tilt servo such that the tilt servo function is quickly and precisely accomplished without using the specialized drive IC for the tilt servo.

As is well known to those skilled in the art, a degree of deviation between the disc and the PUH can be detected through jitter signals when data are read. Similarly, in case of a bent disc, a degree of bend of the disc can be detected by learning based on current jitter information. Data read errors can be minimized by controlling the information surface of the disc and the objective lens of the PUH to be paralleled to each other using the degree of bend as control signals.

In the case, the learning denotes an optimal algorithm for minimizing data read errors through the adjustment of the angle of the objective lens using jitter information read when the data read error is generated.

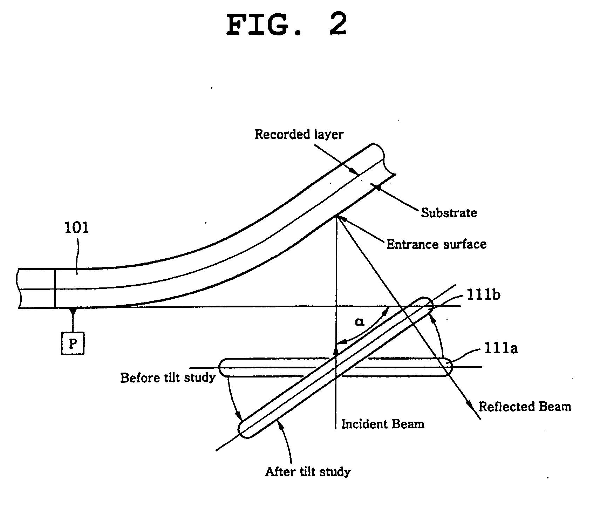

FIG. 2 is a diagram showing the state of an objective lens before and after a tilt servo is performed in the present invention.

In this figure, reference numeral 101 designates a disc, and reference numerals 111a and 111b each designate an objective lens.

In the case, the reference numeral 111a indicates the state of the objective lens incorporated into the PUH before the learning. In this state, if the disc 101 is bent in an upward direction (+ direction) as shown in the figure, errors are generated when information recorded on the information surface of a bent portion of the disc is read.

On the other hand, by performing the learning using the method of the present invention, the tilt servo is accomplished to correspond to the degree and direction of bend of the disc 101 such that the objective lens 111b becomes parallel to the information surface of the bent portion of the disc 101. Accordingly, the information recorded on the information surface of the bent portion of the disc can be correctly read.

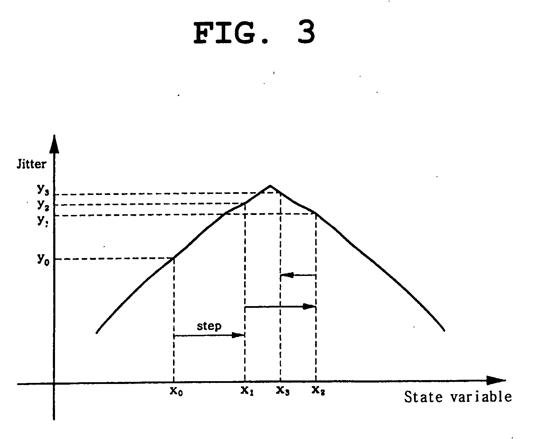

FIG. 3 is a graph showing an optimizing path for maintaining the optimized angle of the objective lens in the present invention.

As shown in this figure, when a read error is generated, a jitter value y₀ is detected at a current position (the current angle of the objective lens) x₀. Then, after the angle of the objective lens is moved by one step in the upward direction (+ direction), a jitter value y₂ is detected at a position x₁.

Next, the two detected jitter values are compared to each other. If the jitter value y₂ after the increase of the angle is better than the jitter value y₀ at the current position, the angle of the objective lens is again moved by one more step in the upward direction (+ direction) and, thereafter, a jitter value y₁ is detected at a position x₂.

Then, the jitter value y₂ at the previous position x₁ is compared to the jitter value y₁ at the current position x₂. If the jitter value y₂ at the previous position x₁ is better than the jitter value y₁ at the current position x₂, after the objective lens is moved by a half (1/2) step in a reverse (downward: -) direction from the current position x₂, it is fixed at a position x3.

In such a way, by performing the tilt servo with respect to the control of the angle of the objective lens, the read error can be minimized even in the case where the disc is bent.

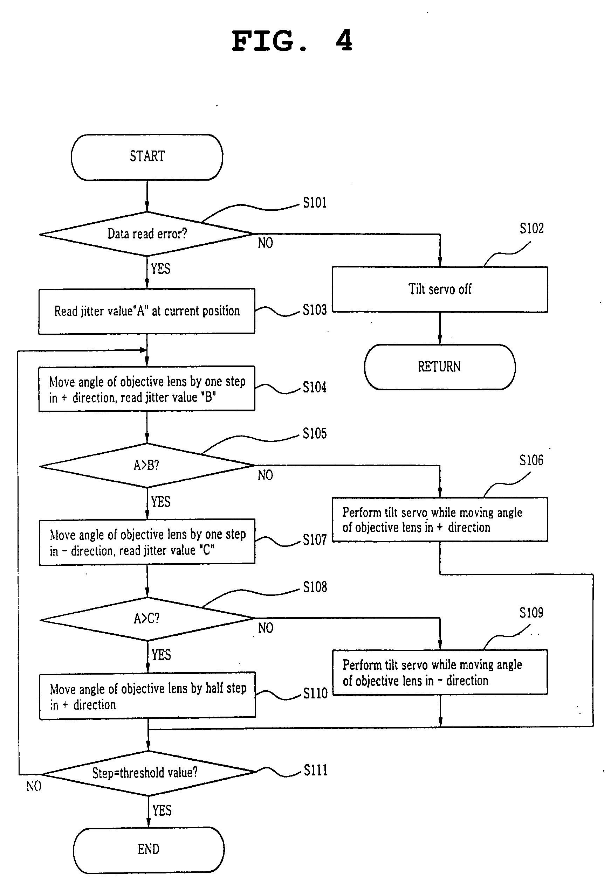

FIG. 4 is a flow chart showing the method of controlling the tilt servo in the DVD system according to the present invention.

As shown in this figure, the method comprises the steps of determining whether a data read error is generated at step S101, turning off the tilt servo if it is determined that the data read error is not generated at step S102, reading a first jitter value "A" at a current position if it is determined that the data read error is generated at step S103, reading a second jitter value "B" after the angle of the objective lens is moved by one step in the upward (+) direction at step.S104, comparing the first and second jitter values to each other at step S105, performing the tilt servo while the angle of the objective lens is moved in the upward (+) direction if the first jitter value is equal to or smaller than the second jitter value at step S106, reading a third jitter value "C" after the angle of the objective lens is moved by one step in the downward (-) direction if the first jitter value is larger than the second jitter value at step S107, comparing the first and third jitter values to each other at step S108, performing the tilt servo while the angle of the objective lens is moved in the downward (-) direction if the first jitter value is equal to or smaller than the third jitter value at step S109, controlling the angle of the objective lens by a half (1/2) step in the upward (+) direction if the first jitter value is larger than the third jitter value at step S110, and determining whether the steps for adjustment reach a preset threshold value at step S111.

The method of controlling the tilt servo according to the present invention will be in detail described below.

First, at step S101, it is determined whether a data read error is generated.

As a result of the determination, the tilt servo turns off at step S102 if it is determined that the data read error is not generated. Otherwise, if it is determined that the data read error is generated, a first jitter value "A" at a current position is read at step 103.

In that case, one of characteristics of the tilt servo according to the present invention is to optimize the angle of the objective lens by monitoring the jitter signal and performing the tilt servo in a particular case, i.e., only when the data read error is generated, without performing a continuous tilt servo.

Next, a second jitter value "B" is read at step S104 after the angle of the objective lens is moved by one step in the upward (+) direction.

Subsequently, the first jitter value is compared to the second jitter value at step S105. As a result of the comparison, if the first jitter value is equal to or smaller than the second jitter value, the tilt servo is performed at step S106 while the angle of the objective lens is moved in the upward (+) direction (see Fig. 2).

Here, the upward (+) direction indicates a direction in which the angle of the objective lens is moved upward in the state that the angle of the objective lens remains parallel to the turntable. On the contrary, the downward (-) direction indicates a direction in which the angle of the objective lens is moved downward in the state in which the angle of the objective lens remains parallel to the turntable.

On the other hand, if the first jitter value is larger than the second jitter value, a third jitter value "C" is read at step S107 after the angle of the objective lens is moved by one step in the downward (-) direction. Then, the first jitter value is compared to the third jitter value at step S108.

As a result of the comparison, if the first jitter value is equal to or smaller than the third jitter value, the tilt servo is performed at step 109 while the angle of the objective lens is moved in the downward (-) direction.

In addition, if the first jitter value is larger than the third jitter value, the angle of the objective lens is controlled by a half (1/2) step in the upward (+) direction. At step S111, it is determined whether the steps for adjusting the angle of the objective lens reach a preset threshold value. If the adjustment steps do not reach the preset threshold value, the process returns to step S104. Otherwise, the tilt servo for adjusting the angle of the objective lens is terminated.

As can be seen from the detailed description, the tilt servo for adjusting the angle of the objective lens is performed only when a data read error is generated. When the tilt servo is performed, jitter values are detected while the objective lens is moved in an upward or downward direction. A jitter value detected prior to the adjustment of the angle of the objective lens is compared to another jitter value detected after the adjustment of the angle of the objective lens. As a result of the comparison, the angle of the objective lens is controlled such that the information reading is performed well.

As described above, in the method of controlling the tilt servo in the DVD system in accordance with the present invention, since the tilt servo for adjusting the angle of the objective lens is performed only when a data read error is generated, heat generation can be minimized and power required for the tilt servo can be also reduced in comparison with conventional continuous tilt servo methods.

In addition, since the specialized drive IC for the tilt servo is not required, a manufacturing cost can be reduced.

Although the preferred embodiment of the present invention have been disclosed for illustrative purposes, those skilled in the art will appreciate that various modifications, additions and substitutions are possible, without departing from the scope and spirit of the invention as disclosed in the accompanying claims.

## Claims

1. A method of controlling a tilt servo in a digital versatile disc system, comprising the steps of:
determining whether a data read error is generated, and reading a first jitter value "A" at a current position if it is determined that the data read error is generated;
reading a second jitter value "B" after an angle of an objective lens is moved by a predetermined step in an upward (+) direction;
comparing the first and second jitter values "A" and "B" to each other, and optimizing the angle of the objective lens by performing the tilt servo while the angle of the objective lens is moved in the upward (+) direction if the first jitter value "A" is equal to or smaller than the second jitter value "B";
reading a third jitter value "C" after the angle of the objective lens is moved by the predetermined step in the downward (-) direction if the first jitter value "A" is larger than the second jitter value "B";
comparing the first "A" and third "C" jitter values to each other, and optimizing the angle of the objective lens by performing the tilt servo while the angle of the objective lens is moved in the downward (-) direction if the first jitter value "A" is equal to or smaller than the third jitter value "C"; and
optimizing the angle of the objective lens while the angle of the objective lens is moved by half of the predetermined step in the downward (-) direction from a current position if the first jitter value "A" is larger than the third jitter value "C".
